# EUROPÄISCHE PATENTANMELDUNG

(11) **EP 1 356 918 A1**
(43) Veröffentlichungstag der Anmeldung: **29.10.2003**
(21) Anmeldenummer: 03008419.8
(22) Anmeldetag: 11.04.2003
(51) Int. Cl.: B29C 69/00, B29C 53/60, B29C 70/34, B29K 105/08, B29L 31/30

(54) **Verfahren zur Herstellung von Bauteilen als Faser- Kunststoff-Verbund**

(30) Priorität: 23.04.2002 DE 10217918
(71) Anmelder: XPERION GmbH, 32052 Herford (DE)
(72) Erfinder: Müller, Dietmar, 32053 Herford (DE)
(74) Vertreter: Moldenhauer, Herbert

(57) **Zusammenfassung**

Das Verfahren dient zur Herstellung von Bauteilen als Faser-Kunststoff-Verbund (FKV), bei dem Fasern (12) von wenigstens einer Spule (10) abgezogen, durch ein Kunstharz-Imprägnierungs-System (16,18,20) geführt und auf einen Kern (36) aufgewickelt werden. Das auf den Kern (36) gewickelte Laminat wird aufgeschnitten, vom Kern genommen und in eine Form (40) gelegt.

## Beschreibung

Die Erfindung betrifft ein Verfahren zur Herstellung von Bauteilen als Faser-Kunststoff-Verbund, bei dem Fasern von wenigstens einer Spule abgezogen, durch ein Kunstharz-Imprägnierungssystem geführt und auf einen Kern aufgewickelt werden.

Faser-Kunststoff-Verbunde (FKV) ermöglichen die Herstellung von Werkstücken mit zahlreichen Vorteilen, zu denen ein geringes Gewicht, eine hohe Festigkeit, ein günstiges Dämpfungsverhalten und akzeptable Herstellkosten gehören.

Neben den weitgehend manuell durchgeführten Verfahren, bei denen trockene oder vorimprägnierte Gelege, Gewebe und Bänder in eine Form gelegt und nach Schließen der Form und Einfüllen von Kunstharz imprägniert werden, gibt es auch andere Verfahren, bei denen Fasern oder Rovings von einer oder mehreren Spulen abgezogen werden, ein Imprägnierungssystem durchlaufen und auf eine Form, z. B. einen zylindrischen Kern gewickelt werden. Diese Verfahren werden als Filament-Winding-Verfahren bezeichnet.

Diejenigen bekannten Verfahren mit hohem Anteil an Handarbeit sind entsprechend kostenintensiv. Sofern die Fasern in Form von vorgefertigten Halbzeugen, also Geweben, Bändern, usw. eingebracht werden, ist ein zusätzlicher Zwischenschritt in der Fertigung notwendig, der in der Regel sogar von einem Zulieferanten ausgeführt werden muß.

Diejenigen der oben genannten Verfahren, bei denen Fasern unmittelbar von Spulen abgezogen, imprägniert und auf einen Kern aufgewickelt werden, lassen sich innerhalb ein und desselben Betriebes und im übrigen praktisch voll automatisch durchführen. Sie sind jedoch im wesentlichen nur für die Herstellung von Stäben, Rohren, Behältern, etc., einsetzbar.

Der Erfindung liegt die Aufgabe zugrunde, ein Verfahren der obigen Art zu schaffen, das eine kostengünstige Herstellung im wesentlichen beliebig geformter Bauteile ermöglicht.

Diese Aufgabe wird erfindungsgemäß bei einem Verfahren der obigen Art dadurch gelöst, daß das auf den Kern gewickelte Laminat aufgeschnitten, vom Kern genommen und in oder auf eine Form gelegt wird.

Mit der vorliegenden Erfindung werden die Vorteile des herkömmlichen Filament-Winding-Verfahrens benutzt für die Herstellung eines Laminats nahezu beliebiger Größe, das die Produktion beliebiger aber insbesondere großer und sehr großer Bauteile als Faser-Kunststoff-Verbund ermöglicht.

Während bei herkömmlichen Verfahren die Fasern beispielsweise in Form von Gewebestreifen bzw. -gelegen vorgegebener Breite in die Form gelegt werden müssen, bietet die Erfindung die Möglichkeit, das von dem Kern abgenommene Laminat entsprechend dem vorhandenen Bedarf zuzuschneiden und in einem Arbeitsgang in die Form einzulegen. Die Stärke der Faserschicht ist dabei in der gesamten Form gleich, während bei herkömmlichen Verfahren Überlappungen zumeist unvermeidlich sind. Die Stärken der Laminatschichten können dem Bedarf angepaßt werden.

Im folgenden werden bevorzugte Ausführungsbeispiele der Erfindung anhand der beigefügten Zeichnung näher erläutert.
- Fig. 1: zeigt das Verfahren zur Herstellung eines Laminats auf einem Kern in einer schematischen Seitenansicht;
- Fig. 2: ist eine Draufsicht zu Fig. 1;
- Fig. 3: veranschaulicht das Einlegen des Laminats in eine Form;
- Fig. 4: zeigt das Ablegen des Laminats auf einem Tisch;
- Fig. 5: zeigt das Übertragen des Laminats auf einen anderen Kern.

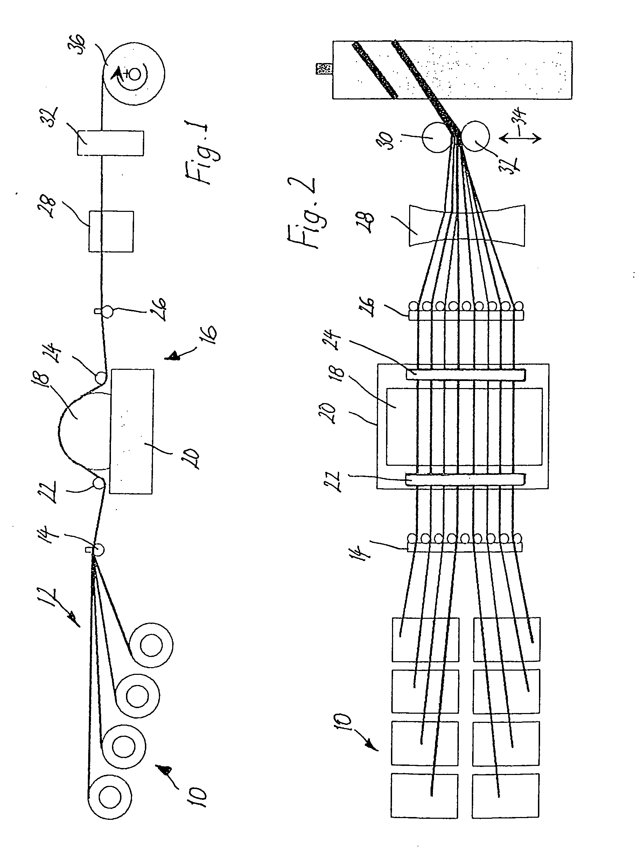

Fig. 1 und 2 zeigen auf der linken Seite acht Spulen 10, von denen jeweils ein Faden oder Garn abgezogen wird. Die Fäden laufen über eine mit Führungsstiften besetzte Führungsleiste 14 und gelangen anschließend in eine Imprägnierungsstation 16.

Hier laufen die Fäden 12 parallel zueinander über eine drehbare Imprägnierungstrommel 18, die mit ihrem unteren Bereich in ein Imprägnierungsbad 20 eintaucht. Die Fäden werden gegen den oberen Bereich der Imprägnierungstrommel 18 mit Hilfe von walzen- oder stangenförmigen Niederhaltern 22,24 angedrückt.

Anschließend laufen die Fäden wiederum über eine mit Stiften besetzte Führungsleiste 26 und von hier aus über einen Führungsbalken 28 in das Ablegeauge 30,32 hinein.

Das Ablegeauge 30,32 bewegen sich im Sinne des Doppelpfeiles 34 in Fig. 2 vor einem drehbaren Kern hin und her, so daß der Faserstrang aus den Fäden 12 hin- und hergehend auf den Kern 36 aufgewickelt werden. Dieses hier geschilderte Verfahren wird als Filament-Winding-Verfahren bezeichnet und ist als solches bekannt. Es wird für die Herstellung von Rohren, Hohlwellen, Behälter und dergleichen verwendet.

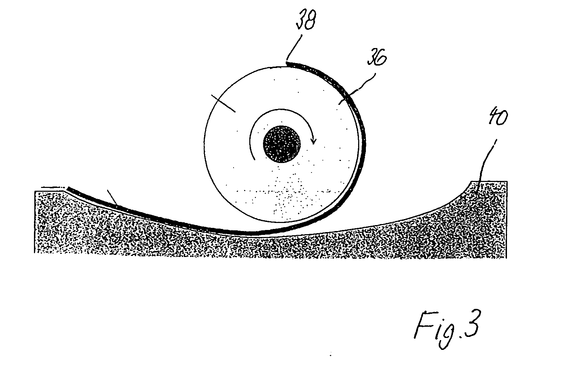

Gemäß der vorliegenden Erfindung wird das aufgewickelte Laminat beispielsweise in einer Mantellinie 38 des Kerns aufgetrennt und entweder unmittelbar in eine Form 40 eingelegt, wie es in Fig. 3 gezeigt ist, oder zunächst der Weiterverarbeitung zugeführt, beispielsweise entsprechend einer zu verwendenden Form zugeschnitten. Erfindungsgemäß wird durch das Filament-Winding-Verfahren eine Matte hergestellt, die unmittelbar als vorimprägniertes Halbzeug verwendet werden kann, das genau auf die Geometrie der Form, in die das Halbzeug eingelegt wird, zugeschnitten ist, so daß das zeitraubende Einlegen von Gewebestreifen in die Form entfallen kann.

Das erfindungsgemäße Verfahren ist einsetzbar für die Herstellung großer Teile, beispielsweise im Bootsbau oder etwa auch beim Bau von Windkraftwerk-Flügeln, Flugzeugflügeln, aber auch jegliche Art anderer Teile aus FKV (Platten u. ä.).

Das Schneiden der Laminate auf dem Kern kann ohne besondere Vorrichtung mithilfe eines Messers erfolgen. So kann beispielsweise der Kern eine Führungsnut entlang einer Mantellinie oder Schlitze oder Absätze aufweisen, an denen ein Messer entlanggeführt werden kann.

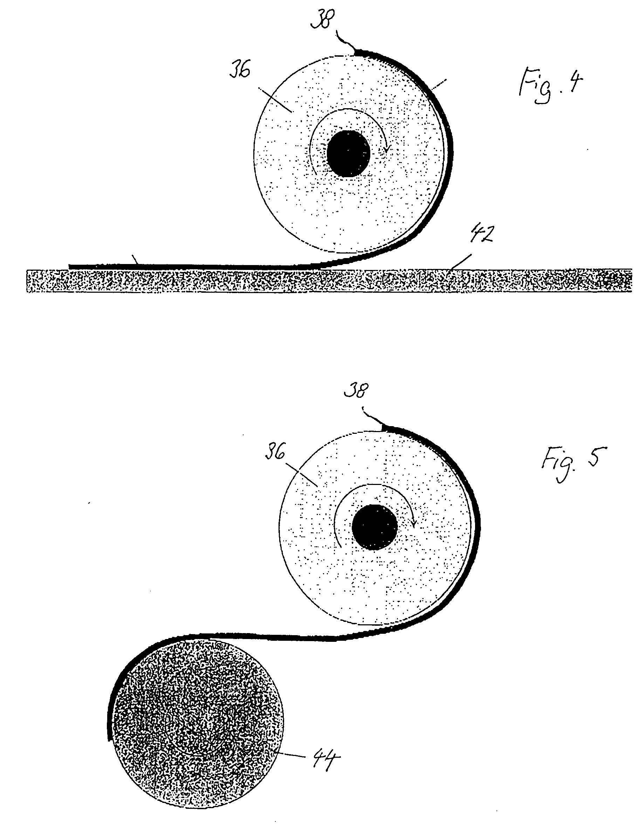

Damit das Laminat beim Schneiden nicht von dem Kern herunterfällt, können verschiedene Klemmeinrichtungen vorgesehen sein, z. B. Klemmleisten, Magnethalter, Stifte oder andere im Kern installierten Vorrichtungen. Der Kern kann auch als Saugtrommel ausgebildet sein und ein Ansaugen des Laminats während der Konfektionierung ermöglichen. Anschließend soll auf Fig. 4 und 5 eingeangen werden.

Während gemäß Fig. 3 das vom Kern abgenommene Laminat direkt in eine Form 40 eingelegt wird, zeigen Fig. 4 und 5 Lösungen für die Zeit zwischen der Herstellung des Laminats auf dem Kern und der endgültigen Verwendung des Laminats. So wird das Laminat gemäß Fig. 4 vom Kern nicht in die Form, sondern auf einen Tisch 42 abgewickelt, auf dem das Laminat beispielsweise konfektioniert werden kann. Anstelle des Tisches 42 kann in gleicher Weise eine Trägerplatte verwendet werden, auf der das Laminat zwischengelagert und transportiert wird.

Fig. 5 zeigt, wie das Laminat vom Kern 36 auf einen zweiten Kern 44 kleineren Durchmessers gewickelt wird, der ebenfalls Transport- oder Lagerzwecken dienen kann.

Als Fasern für die Herstellung des Laminats kommen Kohlefasern, Glasfasern, Aramitfasern, Polyesterfasern, aber auch Naturfasern oder Metallfasern in Betracht. Diese können alternativ oder auch in Mischung angewendet werden. Die Imprägnierung kann beispielsweise mithilfe von Epoxyharz, Polyester, Phenolharz oder thermoplastischen Materialien erfolgen.

Der Kern, auf den das Laminat gewickelt wird, muß nicht in jedem Fall zylindrisch sein. Es kann auch ein konischer Kern sein oder ein in Längsrichtung gewölbter oder zur Mitte hin eingezogener Kern verwendet werden. Dabei ergeben sich in den Bereichen kleineren Durchmessers größere Wandstärken. Eine Änderung der Wandstärke kann auch erzielt werden durch die Art des Ablegens der Fäden. Auf diese Weise kann das Laminat gezielt mit Bereichen unterschiedlicher Wandstärken versehen werden.

## Patentansprüche

1. Verfahren zur Herstellung von Bauteilen als Faser-Kunststoff-Verbund (FKV), bei dem Fasern (12) von wenigstens einer Spule (10) abgezogen, durch ein Kunstharz-Imprägnierungs-System (16,18,20) geführt und auf einen Kern (36) aufgewickelt werden, **dadurch gekennzeichnet, daß** das auf den Kern (36) gewickelte Laminat aufgeschnitten, vom Kern genommen und in eine Form (40) gelegt wird.

2. Verfahren nach Anspruch 1, **dadurch gekennzeichnet, daß** das Laminat nach dem Abnehmen vom Kern (36) zugeschnitten wird.

3. Verfahren nach Anspruch 1, **dadurch gekennzeichnet, daß** das Laminat auf dem Kern (36) zugeschnitten wird.

4. Verfahren nach einem der Ansprüche 1 bis 3, **dadurch gekennzeichnet, daß** das Laminat Kohle-, Glas-, Aramit-, Polyester-, Natur- und/oder Metallfasern enthält.

5. Verfahren nach einem der Ansprüche 1 bis 4, **dadurch gekennzeichnet, daß** die Fasern eine Imprägnierung aus Epoxyharz, Polyester, Phenolharz oder thermoplastischen Materialien aufweisen.

6. Verfahren nach einem der Ansprüche 1 bis 5, **dadurch gekennzeichnet, daß** der Kern (36) zylindrisch ist.

7. Verfahren nach einem der Ansprüche 1 bis 5, **dadurch gekennzeichnet, daß** der Kern einen über seine Länge sich verändernden Durchmesser aufweist.
